# EUROPEAN PATENT APPLICATION

(11) **EP 4 194 897 A1**
(43) Date of publication of application: **14.06.2023**
(21) Application number: 21863379.0
(22) Date of filing: 12.07.2021
(51) Int. Cl.: G01S 17/08

(54) **DISTANCE MEASURING APPARATUS, DISTANCE MEASURING METHOD, CAMERA AND ELECTRONIC DEVICE**

(30) Priority: 02.09.2020 CN 202010911834
(71) Applicant: GUANGDONG OPPO MOBILE TELECOMMUNICATIONS CORP., LTD., Dongguan, Guangdong 523860 (CN)
(72) Inventor: SHAO, Mingtian, Dongguan, Guangdong 523860 (CN)
(74) Representative: Manitz Finsterwald Patent- und Rechtsanwaltspartnerschaft mbB
(86) International application number: PCT/CN2021/105726
(87) International publication number: WO 2022/048311

(57) **Abstract**

Provided are a distance measuring apparatus, a distance measuring method, a camera and an electronic device. The distance measuring apparatus comprises a light source (11), a beam splitter (12), a lens group (13) comprising at least one dispersion lens, a first light limiter (14) and a spectrum sensor (15). The light source (11) is configured to emit detection light in a set waveband. The beam splitter (12) is configured to transmit the detection light. The lens group (13) is configured to disperse transmission light transmitted from the beam splitter (12) to the lens group (13) to focus the light of different wavelengths to different positions. The first light limiter (14) is provided with a light passing area allowing first reflected light to pass through. The first reflected light represents reflected light generated on a second surface when second reflected light is transmitted from the lens group (13) to the second surface of the beam splitter (12), and the second reflected light represents reflected light generated on the surface of a measured object (2) by light focused on the surface of the measured object (2). The spectrum sensor (15) is configured to output first information when receiving the first reflected light. The first information at least represents the light intensity corresponding to the wavelength of the first reflected light and is used for determining the distance between the light source (11) and the measured object (2).

## Description

### CROSS REFERENCE TO RELATED APPLICATIONS

The present application claims the priority of the Chinese patent application No. 202010911834.3, filed on September 02, 2020, and the contents of which are incorporated herein by its entireties.

### TECHNICAL FIELD

The present disclosure relates to the field of image capturing, and in particular to a distance measuring apparatus, a distance measuring method, a camera, and an electronic device.

### BACKGROUND

An electronic device having image capturing functions usually takes a distance measuring module in the electronic device to detect a distance between a lens and an object, such that automatic focusing may be performed based on the distance. When performing macrophotography, in the art, an error between the distance detected by the distance measuring module and an actual distance may be relatively large, resulting in the electronic device having poor focusing, and an unclear image being obtained.

### SUMMARY OF THE DISCLOSURE

The present disclosure provides a distance measuring apparatus, a distance measuring method, a camera, and an electronic device.

The present disclosure provides a distance measuring apparatus, including the following.

A light source is configured to emit a detection light within a set wavelength range.

A beam splitter is configured to allow the detection light to pass through and to output a transmitted light corresponding to the detection light, wherein the detection light enters a first surface of the beam splitter.

A lens group comprising at least one dispersing lens is configured to disperse the transmitted light, which is transmitted from the beam splitter to the lens group, to focus lights of different wavelengths to various focusing positions.

A first light limiter has a light passage region allowing a first reflected light to pass through, wherein the first reflected light represents a reflected light that is produced on a second surface of the beam splitter when a second reflected light is transmitted from the lens group to the second surface of the beam splitter, the second reflected light represents a reflected light that is produced by a light focused on a surface of a to-be-measured object being reflected on the surface of the to-be-measured object, and the second surface is opposite to the first surface.

A spectral sensor is configured to output first information in response to the first reflected light being received, wherein the first information at least represents a light intensity corresponding to a wavelength of the first reflected light, the first information is configured to determine a distance between the light source and the to-be-measured object.

The present disclosure provides a distance measuring method performed by any of the above distance measuring apparatus. The method includes the following.

At least one first wavelength of the light focused on the surface of the to-be-measured object is determined based on the first information.

The distance between the light source and the to-be-measured object is determined based on a set correspondence between wavelengths and calibrated distances and based on the determined at least one first wavelength.

For one focusing position on the surface of the to-be-measured object, a light intensity corresponding to the at least one first wavelength is maximum.

The present disclosure provides a camera, including the following.

A lens group, a focusing motor, and any of the above distance measuring apparatus are provided.

The focusing motor is configured to drive the lens group to move to a corresponding focusing position based on a focusing distance; the focusing distance is determined based on a position relationship between the lens group and the light source in the distance measuring apparatus and based on a first distance; and the first distance represents the distance between the light source in the distance measuring apparatus and the to-be-measured object.

The present disclosure provides a camera, including the following.

A processor, a memory configured to store a computer program capable of being run on the processor, and any of the above distance measuring apparatus are included.

The processor is configured to, when running the computer program, perform operations of any of the above distance measuring method.

The present disclosure provides an electronic device, including the following.

A processor, a memory configured to store a computer program capable of being run on the processor, and any of the above camera are provided.

The processor is configured to, when executing the computer program, perform the operations of any of the above distance measuring method.

The present disclosure further provides a storage medium, having a computer program stored thereon. The computer program, when being executed by a processor, is configured to implement operations of any of the above distance measuring method.

### BRIEF DESCRIPTION OF THE DRAWINGS

FIG. 1 is a structural schematic view of a distance measuring apparatus according to an embodiment of the present disclosure.
FIG. 2 is a schematic view of a spectral pattern according to an embodiment of the present disclosure.
FIG. 3 is a structural schematic view of a distance measuring apparatus according to another embodiment of the present disclosure.
FIG. 4 is a flow chart of a distance measuring method performed by any of the above distance measuring apparatus according to an embodiment of the present disclosure.
FIG. 5 is a structural schematic view of a camera according to an embodiment of the present disclosure.
FIG. 6 is a structural schematic view of a camera according to another embodiment of the present disclosure.
FIG. 7 is a structural schematic view of an electronic device according to an embodiment of the present disclosure.

### DETAILED DESCRIPTION

Before describing the technical solution of the present disclosure, an auto-focusing method in the art will be described in the following.

In the art, an auto-focusing method is available. A laser emitting apparatus of a distance measuring module in the electronic device emits a first infrared laser. The first infrared laser is reflected when the laser propagates to reach a surface of a photographed object, producing a second infrared laser. A laser receiving apparatus of the distance measuring module in the electronic device receives the second infrared laser. A time difference is calculated based on an emission time point corresponding to the first infrared laser and a reception time point corresponding to the second infrared laser. The distance between the camera of the electronic device and the object is calculated based on a propagation speed of the infrared laser in a propagation medium and the calculated time difference. A focusing motor of the electronic device drives a lens group of the camera of the electronic device to a corresponding focusing position based on the calculated distance to complete automatic focusing.

While performing short range image capturing or macrophotography, the actual distance between the camera of the electronic device and the object is small. In the art, an error between the actual distance and the detected distance between the camera and the object measured by the distance measuring module of the electronic device is relatively large, such that an image captured when the electronic device autofocuses on the object based on the detected distance may be unclear.

In order to solve the above technical problem, the present disclosure provides a distance measuring apparatus, including the following components.

A light source is configured to emit a detection light within a set wavelength range.

A beam splitter is configured to allow the detection light to pass through and to output a transmitted light corresponding to the detection light. The detection light incidences on a first surface of the beam splitter.

A lens group including at least one dispersing lens is configured to disperse the transmitted light, which is transmitted from the beam splitter to the lens group, to focus lights of different wavelengths to different positions.

A first light limiter has a light passage region allowing the first reflected light to pass through. The first reflected light represents a reflected light that is produced on a second surface of the beam splitter when the second reflected light is transmitted from the lens group to the second surface of the beam splitter. The second reflected light represents a reflected light that is produced on a surface of a to-be-measured object by a light focused on the surface of the to-be-measured object. The second surface is opposite to the first surface.

A spectral sensor is configured to output first information in response to the first reflected light being received. The first information at least represents a light intensity corresponding to a wavelength of the first reflected light. The first information is configured to determine a distance between the light source and the to-be-measured object.

In an embodiment, the light passage region of the first light limiter is a through hole. The spectral sensor is a dot-array spectral sensor correspondingly.

In an embodiment, the distance measuring apparatus further includes: a first lens and a second light limiter disposed between the light source and the beam splitter.

The first lens is configured to convert the first detection light incident to the first lens into a corresponding second detection light. The second detection light represents parallel beams corresponding to the first detection light.

The second light limiter has a slit allowing the second detection light to pass through. The second detection light that passes through the slit of the second light limiter is configured to enter to the beam splitter.

In an embodiment, the first lens includes at least one collimator and at least one cylindrical lens opposite to the at least one collimator.

The collimator is configured to convert the first detection light into the parallel beam.

The cylindrical lens is configured to converge the parallels beam into a corresponding second detection light.

In an embodiment, the light passage region of the first light limiter is a slit. The spectral sensor is an area-array spectral sensor correspondingly. The first information further represents the position where the second reflected light corresponding to the first reflected light is focused on the surface of the to-be-measured object.

In an embodiment, the lens group includes at least two dispersing lenses. The lens group is further configured to adjust a dispersing range.

The dispersing range represents a distance range between the focusing positions of lights of different wavelengths in the corresponding transmitted light and the lens group when the transmitted light is transmitted to the lens group to be dispersed.

In an embodiment, a transmittance of the first surface of the beam splitter is greater than a reflectance of the first surface.

In an embodiment, the first surface of the beam splitter is coated with at least one layer of a transmission-enhancing film, and the second surface of the beam splitter is coated with at least one layer of a reflection-enhancing film.

In an embodiment, the first information includes a spectral pattern. The spectral pattern represents a correspondence between a wavelength of the first reflected light and a light intensity of the first reflected light.

The present disclosure further provides a distance measuring method performed by the distance measuring apparatus as described in the above. The method includes the following.

At least one first wavelength of the light focused on the surface of the to-be-measured object is determined based on the first information.

A distance between the light source and the to-be-measured object is determined based on a set correspondence between the wavelength and a calibrated distance and based on the determined at least one first wavelength.

At one focusing position on the surface of the to-be-measured object, a light intensity corresponding to the first wavelength is maximum.

In an embodiment, when the spectral sensor is the dot-array spectral sensor, one first wavelength of the light focused on the surface of the to-be-measured object is determined. The operation of determining the distance between the light source and the to-be-measured object based on the set correspondence between the wavelength and the calibration distance and based on the determined at least one first wavelength, includes the following operations.

A first calibration distance corresponding to the first wavelength is determined based on the set correspondence between the wavelength and the calibration distance. The first calibration distance represents the distance between the light source and the to-be-measured object.

In an embodiment, when the spectral sensor is the area-array spectral sensor, at least two first wavelengths of the lights focused on the surface of the to-be-measured object are determined. The operation of determining the distance between the light source and the to-be-measured object based on the set correspondence between the wavelength and the calibration distance and based on the determined at least one first wavelength, includes the following operations.

The distance between the light source and the to-be-measured object is determined based on distribution characteristics of the at least two first wavelengths and based on the set correspondence between the wavelength and the calibration distance.

In an embodiment, the distance measuring method further includes the following operations.

The at least two first wavelengths are clustered, and a clustering result is obtained.

The distribution characteristic corresponding to the at least two first wavelengths is determined based on the clustering result.

The present disclosure further provides a camera including the following components.

A lens group, a focusing motor, and any of the above distance measuring apparatus are provided.

The focusing motor is configured to drive the lens group to move to a corresponding focusing position based on a focusing distance. The focusing distance is determined based on a position relationship between the lens group and the light source in the distance measuring apparatus and based on a first distance. The first distance represents the distance between the light source in the distance measuring apparatus and the to-be-measured object.

The present disclosure further provides a camera including the following components.

A processor, a memory configured to store a computer program capable of being run on the processor, and the distance measuring apparatus as described in the above are provided.

The processor is configured to perform the operations of the distance measuring method when running the computer program.

The present disclosure further provides an electronic device including the following.

A processor, a memory configured to store a computer program capable of being run on the processor, and the camera are provided.

The processor is configured to perform the operations of the distance measuring method described above when running the computer program.

Technical solutions of the present disclosure will be are further illustrated below by referring to the accompanying drawings and embodiments of the specification.

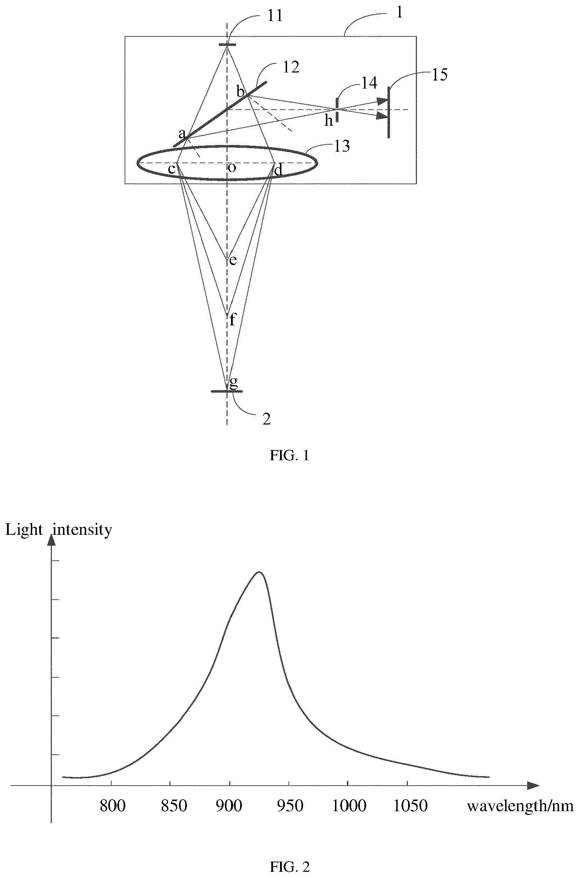

FIG. 1 is a structural schematic view of a distance measuring apparatus according to an embodiment of the present disclosure. As shown in FIG. 1, the distance measuring apparatus 1 includes: a light source 11, a beam splitter 12, a lens group 13 including at least one dispersing lens, a first light limiter 14, and a spectral sensor 15.

The light source 11 is configured to emit a detection light within a set wavelength range.

The beam splitter 12 is configured to allow the detection light to pass through and to output a transmission light corresponding to the detection light. The detection light enters a first surface of the beam splitter.

The lens group 13 including the at least one dispersing lens is configured to disperse the transmitted light transmitted from the beam splitter 12 to the lens group 13 to focus lights of different wavelengths to different positions.

The first light limiter 14 has a light passage region allowing a first reflected light to pass through. The first reflected light represents a reflected light that is produced on a second surface of the beam splitter 12 when a second reflected light is transmitted from the lens group 13 to the second surface of the beam splitter 12. The second reflected light represents a reflected light produced on a surface of the to-be-measured object by the light focused on the surface of the to-be-measured object. The second surface is opposite to the first surface.

The spectral sensor 15 is configured to output first information in response to the first reflected light being received. The first information at least represents a light intensity corresponding to a wavelength of the first reflected light. The first information is configured to determine a distance between the light source and the to-be-measured object.

To be noted that the beam splitter 12 has a first surface and a second surface opposite to the first surface. The first light limiter 14 is disposed between the beam splitter 12 and the spectral sensor 15. Further, the first light limiter 14 is disposed near the second surface of the beam splitter 12 and away from the first surface of the beam splitter 12.

An operating principle of the distance measuring apparatus 1 is described below by referring to FIG. 1.

The light source 11 emits the detection light within the set wavelength range. In practice, the light source 11 is a point light source and may emit a near-infrared light within the set wavelength range. The detection light has a wide wavelength range. The set wavelength range may be from 760 nm to 1500 nm.

When the detection light emitted by the light source 11 propagates to the first surface of the beam splitter 12, a portion of the detection light is reflected at the first surface of the beam splitter 12, and another portion of the detection light passes through the first surface and the second surface of the beam splitter 12 and is transmitted from the second surface of the beam splitter 12. The first surface and the second surface of the beam splitter 12 are opposite to each other. The beam splitter 12 does not change a propagation direction of the detection light. Therefore, the propagation direction of the transmitted light transmitted from the second surface of the beam splitter 12 is the same as the propagation direction of the corresponding detection light.

When the transmitted light transmitted from the second surface of the beam splitter 12 passes through the lens group 13 including the at least one dispersing lens, and the transmitted light may be dispersed, such that the transmitted light (the transmitted light is a complex colored light) is decomposed into monochromatic lights. In this way, the monochromatic lights, which are in different wavelengths and included in the transmitted light, may be focused at different positions in an axial direction, such as positions e, f, and g in FIG. 1. The g represents a focusing position on the surface of the to-be-measured object. The lens group 13 does not change the propagation direction of the transmitted light transmitted from the beam splitter 12 to the lens group 13.

When the to-be-measured object 2 is located within a dispersing range of the lens group 13, the light focused on the surface of the to-be-measured object 2 is reflected on the surface of the to-be-measured object 2, producing the corresponding second reflected light. The second reflected light is a light beam. Since an optical path is reversible, the second reflected light returns to the lens group 13 along an emission path of the corresponding transmitted light and passes through the lens group 13 to reach the second surface of the beam splitter 12. In this way, the second reflected light propagates along the emission path of the transmitted light from the second surface of the beam splitter 12 to finally return to the second surface of the beam splitter 12. For example, in FIG. 1, the transmitted light passing through a region corresponding to the ab of the beam splitter 12 enters a region corresponding to the cd of the lens group 13. The transmitted light is scattered when passing through the lens group 13. Lights, which are in different wavelengths and included in the transmitted light, are focused to different positions. The light focused on the surface of the to-be-measured object 2 is reflected at a focusing position where the surface g of the to-be-measured object is located, producing the corresponding second reflected light. The second reflected light is presented as an inverted cone formed by three points g, c, and d shown in FIG. 1. Since the optical path is reversible, the second reflected light passes through the region corresponding to the cd of the lens group 13 to reach the region corresponding to the second surface ab of the beam splitter 12. The dispersing range represents a distance range between the focusing positions of the lights of the different wavelengths in the corresponding transmitted light and an optical center o of the lens group 13 when the transmitted light is transmitting through and dispersed by the lens group 13. The dispersing range is determined by a minimum distance and a maximum distance from all distances between the focusing positions and the optical center o of the lens group 13.

When the second reflected light propagates to reach the second surface of the beam splitter 12, the second reflected light is reflected at the second surface of the beam splitter 12, producing a corresponding first reflected light. The first reflected light passes through the light passage region of the first light limiter 14. The spectral sensor 15 outputs first information when detecting the first reflected light that passes through the light passage region of the first light limiter 14. The first information at least represents the light intensity corresponding to the wavelength of the first reflected light. In FIG. 1, a triangle formed by points a, b and h is an isosceles triangle. The h represents a center of the light passage region of the first light limiter 14. The ab corresponds to a maximum diameter of an area of the surface of the beam splitter 12 reached by the detection light. In this way, it is ensured that the first reflected light generated by the second reflected light reflected by the second surface of the beam splitter 12 may pass through the first light limiter 14 and thus be received by the spectral sensor 15.

To be noted that, the beam splitter 12 is configured to allow the detection light that enters the first surface of the beam splitter 12 to pass through and to reflect the second reflected light transmitted from the lens group 13 to the second surface of the beam splitter 12.

In practice, the transmittance of the first surface of the beam splitter 12 is greater than the reflectance of the first surface. For example, the transmittance of the first surface of the beam splitter is greater than 50%. In this way, when any beam of the detection light emitted by the light source 11 propagates to the first surface of the beam splitter, the amount of light of the beam transmitted through the second surface of the beam splitter 12 is greater than the amount of light of the beam reflected by the first surface of the beam splitter 12, such that the amount of energy lost during the detection light propagation may be reduced. The transmittance of the second surface of the beam splitter 12 is less than the reflectance of the second surface. For example, the reflectance of the second surface of the beam splitter is greater than 50%. In this way, it is ensured that the second reflected light is reflected at the second surface of the beam splitter 12 to produce the corresponding first reflected light. Therefore, the spectral sensor 15 may detect the corresponding first reflected light.

In an embodiment, the first surface of the beam splitter 12 is coated with at least one layer of transmission-enhancing film, and the second surface of the beam splitter 12 is coated with at least one layer of reflection-enhancing film. The transmission-enhancing film is configured to increase the amount of light transmitted through the first surface of the beam splitter 12. The reflection-enhancing film is configured to reduce the amount of light transmitted through the second surface of the beam splitter 12 and to increase the amount of reflected light.

An area of the light passage region of the first light limiter 14 may be adjustable. The first light limiter 14 is configured to limit the intensity of the first reflected light passing through the light passage region. The light passage region of the first light limiter 14 allows only the first reflected light corresponding to the light focused on the surface of the to-be-measured object 2 to pass through. As the light passage region of the first light limiter 14 is narrowed, the intensity of the light passing through the light passage region of the first light limiter 14 is reduced, the amount of stray light passing through the first light limiter 14 is reduced, and the distance determined based on the first information output by the spectral sensor 15 may be more accurate.

The spectral sensor 15 may receive light within a visible wavelength range. The spectral sensor 15 may be a charge-coupled device (CCD) spectral sensor or a complementary metal-oxide-semiconductor (CMOS) spectral sensor.

In an embodiment, the first information may include a spectral pattern, as shown in FIG. 2, the spectral pattern represents a correspondence between the wavelength of the first reflected light and the light intensity of the first reflected light.

In the present embodiment, when the transmitted light transmitting from the second surface of the beam splitter 12 is passing through and dispersed by the lens group 13, among the entire transmitted light, a light intensity corresponding to a wavelength of the light focused on the surface of the to-be-measured object 2 may be maximum. Therefore, a first wavelength of the light focused on the surface of the to-be-measured object 2 may be determined based on the correspondence between the wavelength and the light intensity represented by the first information, and the distance between the light source 11 and the to-be-measured object 2 may be determined based on a set correspondence between the wavelength and a calibration distance and based on the determined first wavelength. The detection light, which is emitted by the light source and within the set wavelength range, has a wide wavelength range. When the transmitted light transmitted from the beam splitter to the lens group is dispersed, lights of different wavelengths may be focused to different focusing positions. A size of the spectral sensor is smaller than a size of a spectrometer, and therefore, the distance measuring apparatus may be applicable for measuring a short distance. In addition, a receiving surface of the spectral sensor configured to receive the first reflected light is larger than that of the spectrometer configured to receive the corresponding reflected light, the amount of the first reflected light received by the spectral sensor may be relatively large, the light energy is more efficiently utilized by the spectral sensor. Therefore, even when the distance between the distance measuring apparatus and the to-be-measured object is short, the distance measured by the distance measuring apparatus may be highly accurate. The lens group may be configured to adjust the dispersing range so as to change the focusing positions of lights of various wavelengths. Therefore, when capturing images at a short range, the distance measured by the distance measuring apparatus may be highly accurate.

In an embodiment, the light passage region of the first light limiter 14 may be a through hole. In this case, the first light limiter 14 may be a diaphragm, and the spectral sensor 15 may be a dot-array spectral sensor correspondingly. A diameter of the through hole of the diaphragm may be adjustable.

As the diameter of the through hole of the diaphragm is reduced, the spectral pattern output by the spectral sensor 15 may be sharper, and the distance determined based on the spectral pattern may be more accurate.

To be noted that the detection light emitted by the light source 11 forms a corresponding light spot when reaching the beam splitter 12. For example, the light spot may be located in a region corresponding to the ab in FIG. 1.

The transmitted light, which is formed by any beam of the detection light emitted from the light source 11 and passing through the second surface of the beam splitter 12, is projected onto the surface of the lens group 13 to form the light spot. For example, the light spot is located in the region corresponding to the cd. Accordingly, when the transmitted light passes through and is dispersed by the lens group 13, the light that is focused onto the surface of the to-be-measured object 2 forms the light spot. The light spot corresponds to a dot on the surface of the to-be-measured object 2. Therefore, the first information output by the spectral sensor 15 is configured to determine a distance between the focusing position where the light spot is located on the surface of the to-be-measured object and the light source.

In an embodiment, the distance measuring apparatus 1 further includes: a first lens 16 and a second light limiter 17 disposed between the light source 11 and the beam splitter 12.

The first lens 16 is configured to convert a first detection light entering the first lens 16 into a corresponding second detection light. The second detection light represents parallel beams corresponding to the first detection light.

The second light limiter 17 has a slit allowing the second detection light to pass through. The second detection light passing through the slit of the second light limiter 17 is configured to enter the first surface of the beam splitter 12.

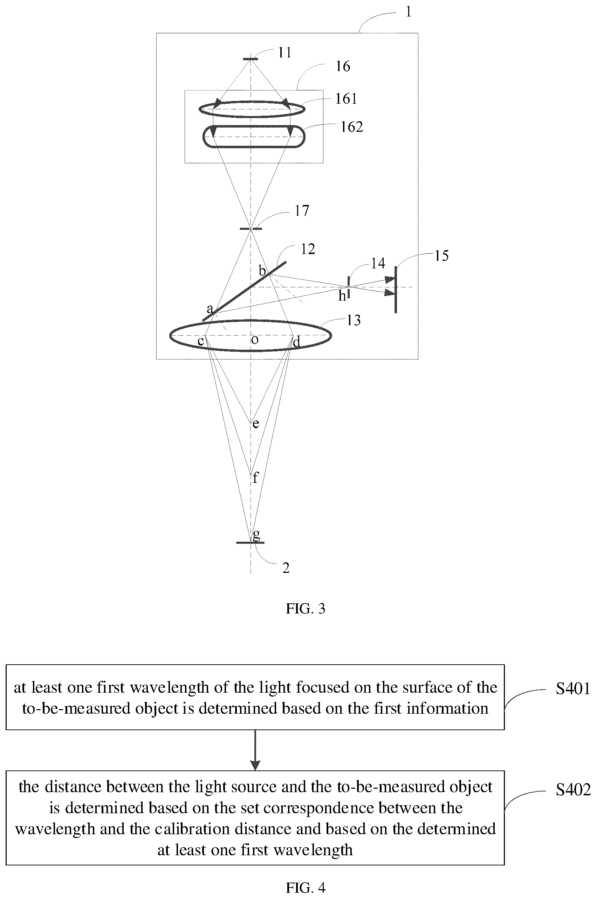

As shown in FIG. 3, FIG. 3 is a structural schematic view of a distance measuring apparatus according to another embodiment of the present disclosure. The distance measuring apparatus shown in FIG. 3 is further configured with the first lens 16 and the second light limiter 17 disposed between the light source 11 and the beam splitter 12, in addition to the structure shown in FIG. 1.

The first lens 16 is a linear lens. After the first detection light emitted by the light source 11 passes through the first lens 16, the first detection light is converted into a corresponding second detection light. A portion of the second detection light corresponding to the first detection light enters the first surface of the beam splitter 12 by passing through the slit of the second light limiter 17. A portion of the second detection light is transmitted from the second surface of the beam splitter 12 to the lens group 13 to be dispersed. The slit of the second light limiter 17 is a slit aperture which has an adjustable width and is narrow and elongated.

To be noted that the second detection light is the parallel beams corresponding to the first detection light. A distance between the two adjacent rays of the first detection light is increased as a propagation distance of the rays increases, and rays of the second detection light are parallel to each other.

To be noted that, since the second detected light passing through the second light limiter 17 in FIG. 3 corresponds to a linear spot, the light focused on the surface of the to-be-measured object 2 in FIG. 3 is also a linear spot, the second reflected light passing through the first light limiter 14 is also a linear spot, and the spectral sensor 15 detects a linear spot. However, in FIG. 1, the light focused on the surface of the to-be-measured object 2 to a dot-shaped spot, the second reflected light passing through the first light limiter 14 is also a dot-shaped spot, and the spectral sensor 15 detects a dot-shaped spot. Compared to FIG. 2, a detection range on the surface of the to-be-measured object 2 detected by the distance measuring apparatus 1 in FIG. 3 may be increased. The position of the linear spot in FIG. 3 is the detection range of the surface of the to-be-measured object 2. The position of the dot-shaped spot in FIG. 2 is the detection range of the surface of the to-be-measured object 2.

In an embodiment, the first lens 16 includes at least one collimator 161 and at least one cylindrical lens 162 opposite to the at least one collimator 161.

The collimator is configured to convert the first detection light into the parallel beams.

The cylindrical lens is configured to converge the parallel beams into the corresponding second detection light.

In an embodiment, the light passage region of the first light limiter 14 in FIG. 3 is a slit, and the spectral sensor 15 is the area-array spectral sensor correspondingly. The first information also represents the focusing position where the second reflected light corresponding to the first reflected light is focused on the surface of the to-be-measured object.

The first reflected light is produced by the second reflected light reflected by the second surface of the beam splitter 12, and the second reflected light is produced by the light focused on the surface of the to-be-measured object 2 being reflected by the surface of the to-be-measured object 2. Therefore, there is a correspondence between the focusing position of the first reflected light and the focusing position of the second reflected light on the surface of the to-be-measured object. In practice, different numbers or letters may be used to indicate various focusing positions on the surface of the to-be-measured object 2 corresponding to the first reflected light. spectral sensor 15 may output at least two spectral patterns. Each spectral pattern may represent correspondence between the wavelength and the light intensity. Each spectral pattern corresponds to one focusing position, and different spectral patterns correspond to different focusing positions.

In the present embodiment, when the distance measuring apparatus 1 is further arranged with the first lens 16, any beam of the first detection light emitted by the light source 11 is converted into a corresponding a beam of second detection light after passing through the first lens 16. Since the second detection light is the parallel beams corresponding to the first detection light, when the second detection light passes through the slit of the second light limiter 17 and is projected onto the beam splitter 12, a linear light spot is formed. Therefore, among the light passing through the slit of the second light limiter 17, the transmitted light transmitted from the second surface of the beam splitter 12 is dispersed by the lens group 13 when passing through the lens group 13, and the light focused on the surface of the to-be-measured object also forms a linear spot. In this case, the first reflected light passing through the first light limiter 14 also forms a linear spot correspondingly. The first information output by the spectral sensor 15 may represent the light intensity corresponding to the wavelength of the first reflected light at each focusing position included in the linear spot on the surface of the to-be-measured object 2. In this way, the distance between the light source 11 in the distance measuring apparatus and the to-be-measured object 2 may be determined based on the light intensity corresponding to the wavelength of the first reflected light at each focusing position and based on the set correspondence between the wavelength and the calibration distance. In the present embodiment, a wavelength having a large error may be discarded based on distribution characteristics of the wavelength of the first reflected light corresponding to each focusing position on the surface of the to-be-measured object 2 represented by the first information, and distances between various focusing positions on the surface of the to-be-measured object 2 and the light source 11 may be determined based on light intensities corresponding to wavelengths after discarding the wavelength having the large error and based on the set correspondence between the wavelength and the calibration distance. Finally, the distance between the light source 11 in the distance measuring apparatus and the to-be-measured object 2 is determined based on the distances corresponding to the various focusing positions. For example, when the surface of the object is uneven, a measurement error of the detected distance between the light source 11 and the measured object 2 may be reduced, and the measurement accuracy may be improved.

In an embodiment, the lens group 13 includes at least two dispersing lenses. The lens group 13 is further configured to adjust the dispersing range.

The dispersing range represents a range of distances between the focusing positions of lights of different wavelengths in the transmitted light and the lens group when the transmitted light is transmitted to and dispersed by the lens group.

In practice, the focusing positions of the lights of different wavelengths in the transmitted light may be adjusted by adjusting a face shape and a structure of the lens group 13, such that the distance between the optical center of the lens group 13 and the focusing position on the surface of the to-be-measured object 2 may be adjusted, and focusing distances corresponding to the lights of different wavelengths may be adjusted. In this case, the dispersing range is determined by a nearest focusing position and a farthest focusing position corresponding to lights of different wavelengths in the transmitted light. The nearest focusing position represents a focusing position that is nearest to the optical center of the lens group 13, and the farthest focusing position represents a focusing position that is farthest away from the optical center of the lens group 13.

In the present embodiment, the lens group 13 includes at least two dispersing lenses, corresponding to adjusting the dispersing range by adjusting the structure of the lens group 13.

In particular, when the dispersing range of the lens group 13 needs to be shortened, the distance between the focusing position on the surface of the to-be-measured object 2 and the optical center of the lens group 13 may be reduced. When the dispersing range of the lens group 13 needs to be increased, the distance between the focusing position on the surface of the to-be-measured object 2 and the optical center of the lens group 13 may be increased.

In practice, the distance measuring apparatus may be arranged inside the camera, and shortening the dispersing range of the lens group 13 may be applicable for a macro-focus mode. Increasing the dispersing range of lens group 13 may be applicable for a telephoto mode.

FIG. 4 is a flow chart of a distance measuring method performed by any of the above distance measuring apparatus according to an embodiment of the present disclosure. A subject of performing the distance measuring method may be a processor. The processor may be arranged inside the distance measuring apparatus, in a camera, or in an electronic device having an image-capturing function. The electronic device may be a mobile phone, a microscope, and so on. The distance measuring method in the present embodiment may be applicable to a near range zooming mode, a wide-angle macro shooting mode, and a short range focusing mode.

As shown in FIG. 4, the distance measuring method provided by the present embodiment includes the following operations.

In an operation S401, at least one first wavelength of the light focused on the surface of the to-be-measured object is determined based on the first information. Among all lights focused on one focusing position of the surface of the to-be-measured object, the light intensity corresponding to the first wavelength is the maximum.

In the present embodiment, the first information at least represents the light intensity corresponding to the wavelength of the first reflected light.

The processor determines the first wavelength corresponding to at least one focusing position corresponding to the light on the surface of the to-be-measured object, based on the correspondence between the wavelength and the light intensity represented by the first information. The light focused onto the surface of the to-be-measured object may correspond to one focusing position or correspond to at least two different focusing positions. Among all lights focused on one focusing position of the surface of the to-be-measured object, the light intensity corresponding to the first wavelength is the maximum.

In an operation S402, the distance between the light source and the to-be-measured object is determined based on the set correspondence between the wavelength and the calibration distance and based on the determined at least one first wavelength.

The processor stores the set correspondence between the wavelength and the calibration distance. In response to the processor determining the first wavelength corresponding to the at least one focusing position corresponding to the light on the surface of the to-be-measured object, the processor determines a first calibration distance corresponding to each first wavelength of the at least one first wavelength based on the set correspondence between the wavelength and the calibration distance and based on the determined first wavelength corresponding to at least one focusing position corresponding to the light on the surface of the to-be-measured object. The processor determines the distance between the light source in the distance measuring apparatus and the to-be-measured object 2 based on the first calibration distance corresponding to each of the at least one first wavelength.

To be noted that, before the processor measures the distance, an auxiliary distance measuring apparatus may measure wavelengths of lights focused on one surface of the to-be-measured object in different environments and calibration distances corresponding to the wavelengths, and the processor may establish the set correspondence between the wavelengths and the calibration distances based on the detection by the auxiliary distance measuring apparatus.

In an actual calibration operation, the auxiliary distance measuring apparatus may measure the wavelengths of the lights focused on the surface of the to-be-measured object and the corresponding calibration distances for a plurality of times in different environments, such that the wavelength of the light focused on the surface of the to-be-measured object and the corresponding calibration distance may be determined eventually. In this way, an error of the calibration distance obtained from one measurement in one environment may be reduced. The different environments may include at least one of the following: environments of different colour temperatures; environments of different brightnesses.

When the processor is arranged in the electronic device having the image capturing function, and after the electronic device is manufactured, the set correspondence between the wavelength and the calibration distance may be corrected based on the wavelengths and the corresponding distances of the lights focused on the surface of the to-be-measured object measured by a first focusing method supported by the electronic device. In this way, an accuracy of the calibration distance corresponding to the first wavelength determined based on the first information output by the distance measuring apparatus and based on the set correspondence between the wavelength and the calibration distance may be ensured. The first focusing method includes at least one of the following.
A phase detection auto focus (PDAF) method;
A laser detection auto focus (LDAF) method; and
A contrast detection auto focus (CDAF) method.

In the present embodiment, among all lights focused on one focusing position of the surface of the to-be-measured object, the light intensity corresponding to the first wavelength is the maximum. The processor determines the first wavelength corresponding to at least one focusing position corresponding to the light on the surface of the to-be-measured object based on the first information. The processor accurately determines the distance between the light source in the distance measuring apparatus and the to-be-measured object based on the set correspondence between the wavelength and the calibrated distance and based on the determined at least one first wavelength. In this way, the processor obtains the distance between the lens group and the to-be-measured object based on a position relationship between the lens group of the camera in the electronic device and the light source in the distance measuring apparatus. Further, the processor accurately determines the focusing distance of the electronic device based on the distance between the lens group and the to-be-measured object. In this way, resolution of an image taken by autofocusing based on the focusing distance may be improved.

In an embodiment, when the spectral sensor is the dot-array spectral sensor, the processor determines one first wavelength of the light focused onto the surface of the to-be-measured object based on the first information. The operation of determining the distance between the light source and the to-be-measured object based on the set correspondence between the wavelength and the calibrated distance and based on the determined at least one first wavelength, includes the following.

The first calibration distance corresponding to the first wavelength is determined based on the set correspondence between the wavelength and the calibration distance. The first calibration distance represents the distance between the light source and the to-be-measured object.

In the present embodiment, the dot-array spectral sensor may be applicable for point detection scenarios. In this case, the second reflected light corresponding to one focusing position on the surface of the to-be-measured object is detected. The focusing position corresponds to a position where the dot-shaped spot formed by the light focused on the surface of the to-be-measured object is located. As shown in FIG. 1, when the transmitted light transmitted from the second surface of the beam splitter 12 is passing through and dispersed by the lens group 13, the light, which is in the transmitted light and is focused on the surface of the to-be-measured object 2, forms the dot-shaped spot, corresponding to one focusing position on the surface of the to-be-measured object 2. The first reflected light received by the second surface of the beam splitter 12 is the reflected light from one focusing position on the surface of the to-be-measured object 2. Therefore, the first reflected light, which is received by the dot-array spectral sensor 15 and enters the dot-array spectral sensor 15 through the through hole of the first light limiter 14, also forms a dot-shaped light spot. The first information output by the dot-array spectral sensor 15 represents the wavelength and the light intensity of the second reflected light corresponding to one focusing position on the surface of the to-be-measured object 2. In the present embodiment, in response to the processor determining the first wavelength having the maximum light intensity based on the first information, the processor determines the first calibration distance corresponding to the first wavelength, i.e., the distance between the light source 11 and the to-be-measured object 2, based on the set correspondence between the wavelength and the calibration distance.

In the present embodiment, the processor determines the distance between one focusing position on the surface of the to-be-measured object 2 and the light source 11. When the surface of the to-be-measured object 2 is relatively flat, the distance determined by the processor may be more accurate.

In an embodiment, when the spectral sensor is an area-array spectral sensor, the processor determines at least two first wavelengths of the light focused on the surface of the to-be-measured object. The operation of determining the distance between the light source and the to-be-measured object based on the set correspondence between the wavelength and the calibrated distance and based on the determined at least one first wavelength, includes the following.

The processor determines the distance between the light source and the to-be-measured object based on the distribution characteristics of the at least two first wavelengths and based on the set correspondence between the wavelength and the calibration distance.

As shown in FIG. 3, the light passage region of the first light limiter 14 is a slit, and the spectral sensor 15 is the area-array spectral sensor. The area-array spectral sensor is applicable for scenarios of linear detection. In this case, the second reflected light corresponding to different focusing positions on the surface of the to-be-measured object may be detected.

In the present embodiment, when the transmitted light from the second surface of the beam splitter 12 is passing through and is dispersed by the lens group 13, the light in the transmitted light that is focused onto the surface of the to-be-measured object 2 forms a linear spot. The first reflected light received on the second surface of the beam splitter 12 is the reflected light reflected by different focusing positions on the surface of the to-be-measured object 2. Therefore, the first information output by the area-array spectral sensor 15 represents the wavelength and light intensity of the second reflected light corresponding to different focusing positions on the surface of the to-be-measured object 2. In the present embodiment, in response to the processor determining the first wavelength corresponding to each of the at least two focusing positions on the surface of the to-be-measured object based on the first information, the processor determines the distribution characteristics corresponding to the at least two first wavelengths based on the first wavelength corresponding to each of the at least two focusing positions. In the present embodiment, the distribution characteristics represents distribution of the first wavelengths corresponding to the different focusing positions on the surface of the to-be-measured object. In practice, the at least two first wavelengths may be clustered to obtain a clustering result. The processor determines the distribution characteristics corresponding to the at least two first wavelengths based on the clustering result.

The processor determines the distance between the light source 11 and the to-be-measured object 2 based on the distribution characteristics of the at least two first wavelengths and based on the set correspondence between the wavelength and the calibrated distance.

In the present embodiment, the processor may determine at least two valid first wavelengths based on the distribution characteristics of the at least two first wavelengths, such that the processor may the first calibration distance corresponding to each of the at least two valid first wavelengths based on the set correspondence between the wavelength and the calibration distance. Further, the processor may calculate the distance between the light source 11 and the to-be-measured object 2 based on the determined at least two first calibration distances. The processor may calculate a corresponding mean, a corresponding variance, and so on, based on the determined at least two first calibration distances, to obtain the distance between the light source 11 and the to-be-measured object 2. The valid first wavelength represents the first wavelength that is within a set acceptable error range. The valid first wavelength may alternatively represent a first wavelength which has a wavelength difference within the set range.

The processor may further determine the first calibration distance corresponding to each of the at least one first wavelength based on the set correspondence between the wavelength and the calibration distance. The processor may determine at least two valid first wavelengths based on the distribution characteristics of the at least two first wavelengths. The processor may determine a valid first calibration distance, which corresponds to each of the at least two valid first wavelengths, from the first calibration distance corresponding to each of the at least two first wavelengths based on the at least two valid first wavelengths. In this way, the processor may determine the distance between the light source 11 and the to-be-measured object 2 based on the determined at least two valid first calibration distances. The processor may calculate the corresponding mean, the corresponding variance, and so on, based on the determined at least two valid first calibration distances to obtain the distance between the light source 11 and the to-be-measured object 2. The valid first calibration distance represents the first calibration distance within a set acceptable error range. The valid first calibration distance may alternatively represent the first calibration distance which has a distance difference within the set range.

In practice, a method of determining the at least two valid first wavelengths based on the distribution characteristics of the at least two first wavelengths includes one of the following.

When the number of focusing positions corresponding to the first wavelength within at least one set wavelength range is greater than or equal to a set number, the first wavelength within the set wavelength range is determined to be the valid first wavelength. The set number is determined based on the total number of focusing positions. For example, the set number may be 80% of the total number of focusing positions. The set number is an integer. In this process, the processor may discard the first wavelength corresponding to the first focusing position when a difference between the first wavelength corresponding to the first focusing position and the first wavelength corresponding to each of the at least two second focusing positions is greater than or equal to a set threshold.

When the number of first wavelengths within at least one set wavelength range is greater than or equal to a set number, the first wavelength within the set wavelength range is determined to be the valid first wavelength. The set number is determined based on the total number of first wavelengths. For example, the set number may be 80% of the total number of first wavelengths. The set number is an integer. The set wavelength range may be determined based on the set wavelength range or determined based on the at least two first wavelengths.

In the present embodiment, the processor may determine distances between different focusing positions of the surface of the to-be-measured object 2 and the to-be-measured object 2 based on the first information output by the area-array spectral sensor and based on the set correspondence between the wavelength and the calibration distance. In this way, the processor may finally determine the distance between the light source 11 in the distance measuring apparatus and the to-be-measured object 2. In this process, the first wavelength having a large error or a corresponding distance may be discarded based on the distribution characteristics of the at least two first wavelengths. In this way, when the surface of the to-be-measured object 2 is not flat, for example, when the surface is uneven, a measurement error of the distance between the light source 11 and the to-be-measured object 2 may be reduced, and the measurement accuracy may be improved.

To be noted that, when the processor configured to perform the above distance measuring method based on any of the above distance measuring apparatus is arranged in the electronic device, the processor, after measuring a first distance between the light source and the surface of the to-be-measured object by applying the above distance measuring method, determines a first focusing distance based on the first distance and based on the position relationship between the lens group in the camera of the electronic device and the light source in the distance measuring apparatus. In this case, the processor may take a corresponding compensation value to calibrate the first focusing distance to obtain a second focusing distance. The second focusing distance is sent to a focusing motor in the camera, such that the focusing motor, in response to receiving the second focusing distance, drives the lens group in the camera to move to a corresponding focusing position based on the second focusing distance to complete autofocusing. The corresponding compensation value is determined based on a third focusing distance and a fourth focusing distance measured by the first focusing method supported by the electronic device. The fourth focusing distance is a focus focusing distance measured by the distance measuring apparatus under a measurement condition corresponding to the first focusing method.

In different environments, the processor measures the distance between the to-be-measured object and the lens of the camera by applying the first focusing method supported by the electronic device, and determines the corresponding third focusing distance based on the measured distance. Under the measurement condition corresponding to the first focusing method, the processor takes the distance measuring apparatus in the camera to measure the distance between the to-be-measured object and the lens of the camera and determines the corresponding fourth focusing distance based on the measured distance. The measurement condition represents a parameter of a measuring environment, and the measuring environment includes at least the distance between the electronic device and the measured object, and may further include the colour temperature, the brightness, and so on.

The processor calibrates the fourth focusing distance based on the third focusing distance to determine the corresponding compensation value of the distance measuring apparatus.

In the present embodiment, when the third focusing distance is greater than the fourth focusing distance, the corresponding compensation value is a positive compensation value. When the third focusing distance is less than the fourth focusing distance, the corresponding compensation value is a negative compensation value. An absolute value of the compensation value is equal to an absolute value of a difference between the third focusing distance and the fourth focusing distance. When the third focusing distance is equal to the fourth focusing distance, the corresponding compensation value is zero.

In response to the processor determining the first focusing distance, the processor takes the corresponding compensation value to calibrate the first focusing distance to obtain the second focusing distance.

In the present embodiment, when the corresponding compensation value of the distance measuring apparatus is the negative compensation value, the absolute value of the compensation value is subtracted from the first focusing distance to obtain the second focusing distance.

When the compensation value corresponding to the distance measuring apparatus is the positive compensation value, the absolute value of the compensation value is added to the first focusing distance to obtain the second focusing distance.

To be noted that, when the measuring condition includes any parameter of the colour temperature and the brightness, and when the processor calibrates the fourth focusing distance based on the third focusing distance to determine the compensation value corresponding to the distance measuring apparatus, a correlation between the corresponding measuring condition (such as the colour temperature, the brightness, and so on) and the corresponding compensation value may be established. In this way, when the processor determines the first focusing distance by taking the first distance measured by the distance measuring apparatus under the current measuring condition, the processor determines the compensation value corresponding to the measuring condition based on the colour temperature and the brightness and so on in the measuring condition corresponding to the first focusing distance. In this way, the processor takes the compensation value to calibrate the first focusing distance to obtain the second focusing distance, the calibration accuracy may be improved, and the accuracy of the second focusing distance may be improved.

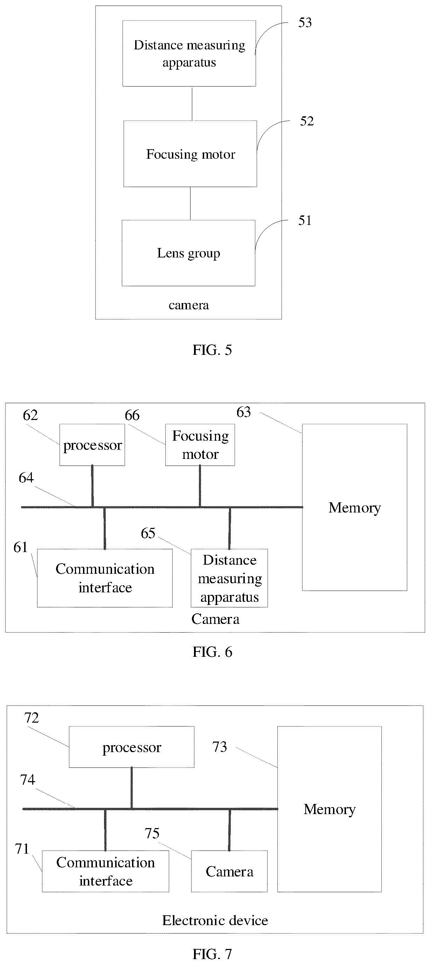

In order to achieve the distance measuring method of the present disclosure, the present disclosure further provides a camera. As shown in FIG. 5, FIG. 5 is a structural schematic view of a camera according to an embodiment of the present disclosure. As shown in FIG. 5, the camera includes: a lens group 51, a focusing motor 52, and a distance measuring apparatus 53 as described in any of the above embodiments.

The focusing motor 52 is configured to drive the lens group 51 to move to a corresponding focusing position based on the focusing distance. The focusing distance is determined based on the position relationship between the lens group 51 and the light source in the distance measuring apparatus 53 and based on the first distance. The first distance represents the distance between the light source in the distance measuring apparatus 53 and the to-be-measured object.

In the present embodiment, a calculation equation may be set based on the position relationship between the lens group 51 and the light source in the distance measuring apparatus 53. The first distance may be substituted into the equation to obtain the corresponding focusing distance. The first distance is determined based on the first information output by the distance measuring apparatus 53. The first information represents at least the correspondence between the wavelength and the light intensity. When the camera is configured with a processor, the first distance may be calculated by the processor in the camera. The first distance may alternatively be calculated by a processor in the electronic device that operates cooperatively with the camera. A method of calculating the first distance for each distance measuring apparatus may be referred to the above description of calculating the distance between the light source and the to-be-measured object, and will not be repeated here.

When the focusing motor 52 obtains the focusing distance, the focusing motor 52 drives the lens group 51 to move to the corresponding focusing position based on the focusing distance to complete autofocusing.

To be noted that the camera in the present embodiment may perform the autofocusing in near range zooming mode, in the wide-angle macro shooting mode, and in the short range focusing mode.

In the present embodiment, the distance between the light source in the distance measuring apparatus and the to-be-measured object may be determined based on the first information output by the distance measuring apparatus, and the accuracy of the distance is improved. In this way, the accuracy of the focusing distance determined based on the distance may be improved, and resolution of the image captured in the autofocusing mode may be increased.

When the spectral sensor in the distance measuring apparatus in the camera is the area-array spectral sensor, the corresponding distance may be finally determined based on wavelengths and light intensities corresponding to different focusing positions on the surface of the to-be-measured object. Even when the surface of the to-be-measured object is uneven, resolution of the image captured in the autofocusing mode may be relatively high.

In an embodiment, the camera includes a wide-angle camera or a macro camera.

In the present embodiment, when the wide-angle camera is in a telephoto shooting mode, the dispersing range of the lens group in the distance measuring apparatus 53 may be increased. When the wide-angle camera is in a macro shooting mode, the dispersing range of the lens group in the distance measuring apparatus 53 may be reduced. When the macro camera is in the macro shooting mode, the dispersing range of the lens group in the distance measuring apparatus 53 may be reduced.

In the present embodiment, in the close range shooting scenario, since the distance measured by the distance measuring apparatus may be highly accurate, a high-resolution image may be obtained when the image is captured by auto-focusing based on the distance measured by the distance measuring apparatus, such that quality of the image captured at the close range may be improved. The lens group in the distance measuring apparatus includes at least two dispersing lenses, configured to adjust the dispersing range, such that focusing positions of lights of different wavelengths may be adjusted, and therefore, focusing distances corresponding to the lights of different wavelengths may be adjusted. In the scenario of close range zooming, the distance measured by the distance measuring apparatus may be highly accurate, the resolution of the image obtained by auto-focusing by the camera based on the distance measured by the distance measuring apparatus is relatively high.

In order to achieve the distance measuring method of the present embodiment, the present disclosure further provides a camera, as shown in FIG. 6, the camera includes the following.

A communication interface 61 is configured to interact with other devices, such as an electronic device.

A processor 62 is connected to the communication interface 61 to achieve interaction with other devices. The processor 62 is configured to, when running a computer program, perform the distance measuring method provided by one or more of the above solutions. The computer program is stored on a memory 63.

The distance measuring apparatus 65 is configured to interact with the processor 62. For example, the processor 62 sends the focusing distance determined based on the first distance to the focusing motor 66.

In practice, of course, various components of the electronic device are coupled with each other via a bus system 64. It is understood that the bus system 64 is configured to enable connection and communication between these components. The bus system 64 includes a data bus, a power bus, a control bus, and a status signal bus. For the clarity, the various buses are labelled as the bus system 64 in FIG. 6.

The memory 63 in the present embodiment is configured to store various types of data to support operation of the camera. Examples of such data include: any computer program configured to operate on the camera.

In order to achieve the distance measuring method of the present disclosure, the present embodiment further provides an electronic device. FIG. 7 is a structural schematic view of an electronic device according to an embodiment of the present disclosure. As shown in FIG. 7, the electronic device includes the following.

A communication interface 71 is configured to interact with other devices, such as a network device.

A processor 72 is connected to the communication interface 71 to enable the interaction with other devices. The processor 72 is configured to, when running a computer program, perform the distance measuring method provided by one or more of the above solutions. The computer program is stored on the memory 73.

The camera 75 is configured to interact with the processor 72. For example, in response to the processor 72 determining the corresponding focusing distance by performing the distance measuring method described above, the processor sends the determined focusing distance to the camera 75. The camera 75 is a camera provided by any of the above technical solutions.

Of course, in practice, various components of the electronic device are coupled together each other via the bus system 74. It is understood that the bus system 74 is configured to enable connection and communication between these components. The bus system 74 includes a data bus, a power bus, a control bus, and a status signal bus. For the clarity, the various buses are labelled as the bus system 74 in FIG. 7.

The memory 73 in the present embodiment is configured to store various types of data to support operation of the electronic device. Examples of such data include: any computer program configured to operate on the electronic device.

It shall be understood that the memory 63 or the memory 73 may be a volatile memory or a non-volatile memory, or may include both volatile and non-volatile memories. The non-volatile memory may be a read-only memory (ROM, Read Only Memory), a programmable read-only memory (PROM, Programmable Read-Only Memory), an erasable programmable read-only memory (EPROM, Erasable Programmable Read-Only Memory), an electrically erasable programmable read-only memory (EEPROM Electrically Erasable Programmable Read-Only Memory (EEPROM), a magnetic random access memory (FRAM), a flash memory, a magnetic surface memory, a compact disc, or a compact disc read-only memory (CD-ROM). The magnetic surface memory may be a magnetic disk memory or a magnetic tape memory. The volatile memory may be a random access memory (RAM), which is used as an external cache. For illustration, but not limitation, various forms of RAM are available, such as a static random access memory (SRAM), a synchronous static random access memory (SSRAM), a dynamic random access memory (DRAM), a synchronous dynamic random access memory (SDRAM), a double data rate synchronous dynamic random access memory (DDRSDRAM), an enhanced synchronous dynamic random access memory (ESDRAM), a synchronous link dynamic random access memory (SLDRAM), and a direct rambus random access memory (DRRAM). The memory 3 described in the embodiments of the present disclosure includes, but is not limited to, these and any other suitable types of memories.

The methods disclosed in the above embodiments of the present disclosure may be applied in or performed by the processor 62 or the processor 72. The processor 62 or the processor 72 may be an integrated circuit chip having signal processing capabilities. In implementation, the operations of the above method may be accomplished by integrated logic circuitry in hardware or instructions in the form of software in the processor 62 or the processor 72. The processor 62 or processor 72 described above may be a general purpose processor, a DSP, or other programmable logic device, a discrete gate or a transistor logic device, a discrete hardware component, and so on. The processor 62 or the processor 72 may implement or perform the methods, the operations and logical blocks disclosed in embodiments of the present disclosure. The general purpose processor may be a microprocessor or any conventional processor. The operations of the method disclosed referring to the embodiments of the present disclosure may be embodied directly as being performed by the hardware decoding processor or performed with a combination of hardware and software modules in the decoding processor. The software module may be located in a storage medium. The storage medium may be located in the memory 63, and the processor 62 reads programs in the memory 63 and completes the operations of the above method in combination with the hardware. The storage medium may alternatively be located in the memory 73, and the processor 72 reads programs in the memory 73 and completes the operations of the above method in combination with the hardware.

The processor 62 or the processor 72 implements corresponding processes in the various methods of the present disclosure when executing the described procedures, which will not repeated here for the brevity.

In some embodiments, the present disclosure further provides a storage medium, i.e., a computer storage medium, specifically a computer readable storage medium. The computer readable storage medium, for example, includes the memory 63 that stores the computer program. The computer program may be executable by the processor 62. For example, the computer readable storage medium includes the memory 73 that stores the computer program, and the computer program may be executable by the processor 72 to perform the operations described in the above method. The computer readable storage medium may be a memory, such as FRAM, ROM, PROM, EPROM, EEPROM, flash memory, magnetic surface memory, an optical disk, or CD-ROM.

In the embodiments provided in the present disclosure, it shall be understood that, the disclosed apparatus and method can be implemented by other means. The embodiments of the apparatus described above are merely schematic, for example, the units are divided based on logical functions only, but may be divided in other ways when actually implemented. For example, multiple units or components can be combined or integrated into another system, or some features can be omitted or not implemented. Furthermore, the components may be coupled or direct coupled or communicatively connected with each other through some interfaces, or may be indirect coupled or communicatively connected with each other. The connection may be electrical, mechanical or in other forms.

The above units illustrated as separate components may or may not be physically separated. The components displayed as units may or may not be physical units. For example, the components may be located at one place or distributed over a plurality of network units. Some or all of the components may be selected based on the actual need to achieve the purpose of the present disclosure.

In addition, various functional units in various embodiments of the present disclosure can all be integrated in one processing module, or each unit can serve as one unit, or two or more units can be integrated in one unit. The above integrated units can be implemented either in the form of hardware or in the form of hardware and software functional units.

It shall be understood by any ordinary skilled person in the art that all or some of the operations in the above methods can be accomplished by hardware associated with program instructions, and the program may be stored in a computer readable storage medium. The program, when being executed, performs the operations in the above methods. The storage medium includes: removable storage devices, a read-only memory (ROM), a random access memory (RAM), a magnetic disk, or an optical disk, and various other media that can store program codes.

To be noted that the terms "first", "second", and so on, are used to distinguish similar objects and not to describe a particular order or sequence.

In addition, technical solutions and technical features described in the embodiments of the present disclosure may be combined with each other in any way that does not conflict with each other.

The above description shows only specific implementations of the present disclosure, but does not limit the scope of the present disclosure. Any variation or substitution conceivable by any person skilled person in the art shall be covered by the scope of the present disclosure. Accordingly, the scope of the present disclosure shall be limited by the scope of the appended claims.

## Claims

1. A distance measuring apparatus, comprising:
a light source, configured to emit a detection light within a set wavelength range;
a beam splitter, configured to allow the detection light to pass through and to output a transmitted light corresponding to the detection light, wherein the detection light enters a first surface of the beam splitter;
a lens group comprising at least one dispersing lens, the lens group being configured to disperse the transmitted light, which is transmitted from the beam splitter to the lens group, to focus lights of different wavelengths to various focusing positions;
a first light limiter, having a light passage region allowing a first reflected light to pass through, wherein the first reflected light represents a reflected light that is produced on a second surface of the beam splitter when a second reflected light is transmitted from the lens group to the second surface of the beam splitter, the second reflected light represents a reflected light that is produced by a light focused on a surface of a to-be-measured object being reflected on the surface of the to-be-measured object, and the second surface is opposite to the first surface;
a spectral sensor, configured to output first information in response to the first reflected light being received, wherein the first information at least represents a light intensity corresponding to a wavelength of the first reflected light, the first information is configured to determine a distance between the light source and the to-be-measured object.

2. The distance measuring apparatus according to claim 1, wherein the light passage region of the first light limiter is a through hole, and the spectral sensor is a dot-array spectral sensor correspondingly.

3. The distance measuring apparatus according to claim 1, further comprising a first lens and a second light limiter disposed between the light source and the beam splitter;
wherein the first lens is configured to convert a first detection light entering the first lens into a corresponding second detection light, the second detection light represents parallel beams corresponding to the first detection light; and
the second light limiter has a slit allowing the second detection light to pass through, the second detection light that passes through the slit of the second light limiter is configured to enter to the beam splitter.

4. The distance measuring apparatus according to claim 3, wherein the first lens comprises at least one collimator and at least one cylindrical lens opposite to the at least one collimator;
the collimator is configured to convert the first detection light into the parallel beams; and
the cylindrical lens is configured to converge the parallel beams into the corresponding second detection light.

5. The distance measuring apparatus according to claim 3, wherein the light passage region of the first light limiter is a slit, the spectral sensor is an area-array spectral sensor correspondingly; the first information further represents a position where the second reflected light corresponding to the first reflected light is focused on the surface of the to-be-measured object.

6. The distance measuring apparatus according to any one of claims 1 to 5, wherein the lens group comprises at least two dispersing lenses, the lens group is further configured to adjust a dispersing range;
the dispersing range represents a range of distances from the focusing positions of the lights of different wavelengths in the corresponding transmitted light to the lens group when the transmitted light is transmitted to and dispersed by the lens group.

7. The distance measuring apparatus according to claim 1, wherein a transmittance of the first surface of the beam splitter is greater than a reflectance of the first surface.

8. The distance measuring apparatus according to any one of claims 1 to 7, wherein the first surface of the beam splitter is coated with at least one layer of a transmission-enhancing film, and the second surface of the beam splitter is coated with at least one layer of a reflection-enhancing film.

9. The distance measuring apparatus according to claim 1, wherein the first information comprises a spectral pattern, the spectral pattern represents a correspondence between a wavelength of the first reflected light and a light intensity of the first reflected light.

10. A distance measuring method performed by the distance measuring apparatus according to any one of claims 1 to 9, comprising:
determining at least one first wavelength of the light focused on the surface of the to-be-measured object based on the first information; and
determining the distance between the light source and the to-be-measured object based on a set correspondence between wavelengths and calibrated distances and based on the determined at least one first wavelength;
wherein for one focusing position on the surface of the to-be-measured object, a light intensity corresponding to the at least one first wavelength is maximum.

11. The method according to claim 10, wherein when the spectral sensor is the dot-array spectral sensor, one first wavelength of the light focused on the surface of the to-be-measured object is determined; and the determining the distance between the light source and the to-be-measured object based on a set correspondence between wavelengths and calibrated distances and based on the determined at least one first wavelength, comprises:
determining a first calibration distance corresponding to the first wavelength based on the set correspondence between wavelengths and calibration distances; wherein the first calibration distance represents the distance between the light source and the to-be-measured object.

12. The method according to claim 10, wherein when the spectral sensor is the area-array spectral sensor, at least two first wavelengths of the light focused on the surface of the to-be-measured object are determined; and the determining the distance between the light source and the to-be-measured object based on a set correspondence between wavelengths and calibrated distances and based on the determined at least one first wavelength, comprises:
determining the distance between the light source and the to-be-measured object based on distribution characteristics of the at least two first wavelengths and based on the set correspondence between wavelengths and calibration distances.

13. The method according to claim 10, further comprising:
clustering the at least two first wavelengths to obtain a clustering result; and
determining distribution characteristics corresponding to the at least two first wavelengths based on the clustering result.

14. A camera, comprising: a lens group, a focusing motor, and the distance measuring apparatus according to any one of claims 1 to 9;
wherein the focusing motor is configured to drive the lens group to move to a corresponding focusing position based on a focusing distance; the focusing distance is determined based on a position relationship between the lens group and the light source in the distance measuring apparatus and based on a first distance; and the first distance represents the distance between the light source in the distance measuring apparatus and the to-be-measured object.

15. A camera, comprising: a processor, a memory configured to store a computer program capable of being run on the processor, and the distance measuring apparatus according to any one of claims 1 to 9,
wherein the processor is configured to, when running the computer program, perform operations of the distance measuring method according to any one of claims 10 to 13.

16. An electronic device, comprising: a processor, a memory configured to store a computer program capable of being run on the processor, and the camera according to claim 14, wherein the processor is configured to, when executing the computer program, perform operations of:
determining at least one first wavelength of the light focused on the surface of the to-be-measured object based on the first information; and
determining the distance between the light source and the to-be-measured object based on a set correspondence between wavelengths and calibrated distances and based on the determined at least one first wavelength;
wherein for one focusing position on the surface of the to-be-measured object, a light intensity corresponding to the at least one first wavelength is maximum.

17. The electronic device according to claim 16, wherein when the spectral sensor is the dot-array spectral sensor, one first wavelength of the light focused on the surface of the to-be-measured object is determined; and the determining the distance between the light source and the to-be-measured object based on a set correspondence between wavelengths and calibrated distances and based on the determined at least one first wavelength, comprises:
determining a first calibration distance corresponding to the first wavelength based on the set correspondence between wavelengths and calibration distances; wherein the first calibration distance represents the distance between the light source and the to-be-measured object.

18. The electronic device according to claim 16, wherein when the spectral sensor is the area-array spectral sensor, at least two first wavelengths of the light focused on the surface of the to-be-measured object are determined; and the determining the distance between the light source and the to-be-measured object based on a set correspondence between wavelengths and calibrated distances and based on the determined at least one first wavelength, comprises:
determining the distance between the light source and the to-be-measured object based on distribution characteristics of the at least two first wavelengths and based on the set correspondence between wavelengths and calibration distances.

19. The electronic device according to claim 18, wherein the processor is further configured to perform operations of:
clustering the at least two first wavelengths to obtain a clustering result; and
determining distribution characteristics corresponding to the at least two first wavelengths based on the clustering result.

20. A storage medium, having a computer program stored thereon, wherein the computer program, when being executed by a processor, is configured to implement operations of the distance measuring method of any one of claims 10 to 13.
